# EUROPEAN PATENT SPECIFICATION

(11) **EP 4 359 180 B1**
(45) Date of publication and mention of the grant of the patent: **04.11.2026**
(21) Application number: 21739586.2
(22) Date of filing: 24.06.2021
(51) Int. Cl.: B27K 3/02, B27K 3/15, B27K 3/52, B27K 3/16, B27K 3/18, B27K 3/26, A01N 61/00, A01P 3/00

(54) **PYROLYSIS BIO-OIL IN PRESERVATIVE FORMULATIONS FOR WOOD OR WOOD DERIVED MATERIALS**
PYROLYSE-BIOÖL IN KONSERVIERUNGSFORMULIERUNGEN FÜR HOLZ ODER HOLZWERKSTOFFE
BIO-HUILE DE PYROLYSE DANS DES FORMULATIONS DE PRÉSERVATION POUR DU BOIS OU DES MATÉRIAUX DÉRIVÉS DU BOIS

(43) Date of publication of application: 01.05.2024
(73) Proprietor: BTG Biomass Technology Group B.V., 7545 PN Enschede (NL)
(72) Inventor: HEERES, Hans, 7545 PN Enschede (NL); SWAGER, KlaasJan, 7545 PN Enschede (NL)
(74) Representative: Arnold & Siedsma
(86) International application number: PCT/EP2021/067406
(87) International publication number: WO 2022/268329

(56) References cited:
- WO-A1-00/25996
- WO-A1-2013/180565
- WO-A1-2020/178597
- US-A- 2 671 061
- US-A1- 2021 001 317
- XIONG ZHE ET AL: "Roles of furfural during the thermal treatment of bio-oil at low temperatures", JOURNAL OF ENERGY CHEMISTRY, ELSEVIER, AMSTERDAM, NL, vol. 50, 13 March 2020 (2020-03-13), pages 85 - 95, XP086219683, ISSN: 2095-4956, [retrieved on 20200313], DOI: 10.1016/J.JECHEM.2020.03.015

## Description

The present invention relates to preservation compositions for wood or wood derived materials such as poles, logs, boards, wood/herbaceous fibers, wood chips, wood strands and cellulose/pulp based materials. The present invention further relates to methods for the preservation of wood and wood derived materials and to the use of the present compositions for protecting wood or wood derived materials against microorganisms or insects. The present invention additionally relates to the use of the present preservation compositions for providing a substitute for creosote treated wood or heavy metal salt treated wood.

Currently, wood treatment chemicals and mixtures such as creosote and heavy metal salt (e.g. Cu-based) solutions are still widely used to conserve wood thereby protecting wood against decomposition thereof by micro-organisms, water, weathering etc. Especially fast growing softwood species are treated, making softwood more durable and longer lasting. In general the chemicals and mixtures used for wood treatment work very well and are relatively cheap however a major problem associated with these chemicals and mixtures is toxicity.

The use of Pyrolysis Bio-Oil (PBO) and/or fractions from PBO as the active agent in the modification of wood or related lignocellulosic or cellulosic materials has been previously described. For example, the use of PBO's as a wood preservation agent is described in WO 91/11499 disclosing preservative compositions in which PBO produced from wood feed-stocks and treated wood-feedstocks were used alone, or in combination, with water-or oil-based preservatives, such as creosote and pentachlorophenol. In this application, the PBO is not cured in the wood, meaning that a large part of the PBO, which is water-soluble, could leach out from the wood. Furthermore, WO 2013/180565 discloses a lignocellulose preservative composition comprising: a) in the range of from 50 to 98 wt% of a pyrolysis oil obtainable by pyrolysis of lignocellulosic material; b) a polymerisable furan compound; and c) a catalyst for polymerising the furan compound in a catalytically effective amount.

Despite the above, there is still a need in the art for alternative, or improved, compositions for the preservation of wood or wood derived materials. Improved in the present context could be, for example, less or no toxicity, increased durability, increased water resistance, increased resistance against microorganisms or insects, and/or economically more feasible.

It is an object of the present invention, amongst other objects, to provide alternative, or improved, compositions for the preservation of wood or wood derived materials.

This object, amongst other objects, was achieved by the present inventions as outlined in the appended claims.

Specifically, this object, amongst other objects, was achieved by providing preservation compositions for wood or wood derived material, the compositions comprise:
a) 30wt% to 99.9wt% of the preservation composition fast pyrolysis oil produced from lignocellulosic biomass;
b) 0.1wt% to 10wt% of the preservation composition of a catalytic water soluble organic, mineral or sulfonic based acid or salt selected from the group consisting of p-toluenesulfonic acid, taurine, phosphoric acid, MgCl₂, Al₂(SO₄)₃, lignosulfonic acid: and
c) water making up to 100wt% of the preservation composition.

Pyrolysis is the thermal decomposition of organic material in an oxygen-free or lean environment. The process is typically carried out at ambient pressures and temperatures ranging from 250°C to 700°C resulting in solid, liquid, and gaseous products. Liquids from any pyrolysis process can be used in accordance to the present invention. Generally, fast, i.e. rapid heating, pyrolysis is applied when the aim is to maximize the liquid yield. Typically, the process is carried out at ambient pressures and at reactor temperatures of around 400°C to 600°C in the absence of air/oxygen. The biomass is rapidly heated and the vapor stream is quickly cooled down to avoid further cracking reactions maximizing liquid yield. Fast pyrolysis of clean woody biomass (e.g. pine wood) can provide a liquid yield up to 70wt%; about 15wt% charcoal and 15wt% of non-condensable gases (e.g. CO, CO₂, CH₄).

The very short heating times in a fast pyrolysis process result in a liquid product containing components of the original biomass. This means that the original chemical functionalities present in the biomass are largely retained. The liquid product is polar, acidic, contains water, is mineral free, and it is immiscible with fossil oils. The liquid can be regarded as a complex mixture of components derived from depolymerization of cellulose, hemicelluloses, and lignin components of the original biomass. Depending on biomass, or lignocellulosic feed applied, the PBO might be produced as a phase separated liquid. This liquid can be treated in an evaporator to obtain a one phase oil, or used directly in the production of the present formulation(s). The ratio of lignin versus sugars in the PBO might vary due to different kinds of lignocellulosic feeds used. Blending of PBO's produced from different kind of feedstock is considered within the context of the present invention.

PBO produced by the thermal treatment of a whole range of lignocellulosic materials at 250°C to 700°C in an oxygen free or oxygen lean atmosphere can be applied (e.g. woody and herbaceous biomass) in the production of the present preservative formulations. Preferably, PBO's produced by Fast Pyrolysis are used.

In some cases freshly produced PBO's are obtained as a phase separated liquid, by directly applying film evaporation as described in EP 2 850 150 can be homogenized. Also (green and eco-friendly) additives/excipients/homogenizers such as polyols, acetic acid and water or a mixture thereof can be applied for this purpose, they also enhance the pot-life of the formulation and facilitate a smooth and full impregnation in wood at ambient temperature. Pre-heating of PBO is highly undesired, as it reduces the pot-life drastically due to aging reactions (increases viscosity).

Furthermore, applying these homogenizers also allows the use of PBO's obtained from different biomass sources, PBO's with different qualities and the blending of different PBO's whilst the quality/properties of the final impregnation formulation remains more or less constant. A constant stable impregnation formulation is of essential importance for subsequent wood treatment and a constant quality of the final wood product (e.g. durability class).

For example, a pyrolysis plant produces PBO from sawdust because this feed is available and cheap. The PBO produced is stable and has a water content of 23 wt%. The following month the sawdust is not available/to expensive, but pellets crumbs are available, the PBO produced from this feed is of lower quality (starts to separate) due to a high water content of 28 wt%. To both PBO's, the homogenizers can be added to obtain a stable product, to the first oil also water can be added to match the water content of the second oil. From both PBO's an impregnation formulation can be produced with comparable quality/properties.

The formulations described here are green alternatives for the current toxic and fossil based preservation agents. The formulations can be applied in both envelope and full cell treatment of wood (solid poles/logs/boards), wood/herbaceous-fibres, wood -chips and -strands (for e.g. manufacturing fiberboards and wood panels)), and cellulose/pulp based materials.

Due to the low viscosity of the formulations described, the impregnation can be performed at ambient temperature. The lower impregnation temperature also contributes to an extended pot-life of the formulation and thus the re-use of the preservative formulation avoiding the production of waste material and additional costs. The high reactivity in the absence of additional cross-linkers of the product allows subsequent curing at a relatively low temperature of, for example, 130°C thereby preserving the mechanical strength of the treated material.

The reactivity of the formulation is enhanced by applying a catalyst. It is believed that the catalyst promotes sugar degrading reactions (inversion, hydrolysis, dehydration) and condensation/curing reactions resulting in a solid material with low leaching.

After curing, the presently treated woody materials do not possess an intense smoky odor. Typically, the cured woody materials have a light brown to dark brown/black color (depending on composition of mixture) and only minimally leach out. Old (end of life) modified/engineered woody materials which were not further treated (e.g. painted) and production residues can be re-used as a feed for fast pyrolysis and subsequent formulation in the present compositions.

Summarizing, the present inventors surprisingly found that the addition of catalytic soluble organic, mineral or sulfonic based acid or salt to a pyrolysis oil provides a composition suitable for the preservation of wood and wood derived materials. The soluble organic, mineral or sulfonic based acid or salt functions like a catalyst enabling the present formulations to cure at relatively low temperatures and in short time intervals. Curing at relatively low temperatures and in short time is important to retain or preserve the structural strength of wood and additionally minimizes operational costs due to relatively simple process steps required. Without wishing to be limited to an underlying mechanism, it is theorized that reactive sugars and sugar derived molecules in the pyrolysis oil are, amongst others, responsible for the curing reaction and that pyrolytic lignin will be partly oxidized and largely fixated due to the curing of reactive sugar components.

The present catalysts are water-soluble and capable of curing the formulation between 120°C to 150°C, typically at 130 °C, within 24 to 48 hours regardless of the wood/fibre species or material thickness used. After curing, the present preservative formulations and/or catalyst do not or only minimal leach from the modified wood material, as they are chemically fixed in the wood by e.g. the curing reactions and/or esterification, etc. Suitable catalysts that can be used according to the present invention are p-toluenesulfonic acid (PTSA), taurine, phosphoric acid, MgCl₂, Al₂(SO₄)₃, lignosulfonic acids and combinations thereof, more preferably p-toluenesulfonic acid.

According to a preferred embodiment, the present preservation compositions for wood or wood derived material further comprise:
d) 0.01wt% to 30wt% of the preservation composition of one or more additives and/or excipients selected from the group consisting of acetic acid, lactic acid, methyl lactate, ethyl lactate, citric acid, glycerol, ethylene glycol and propylene glycol, more preferably acetic acid and propylene glycol.

According to an especially preferred embodiment, the present preservation compositions for wood or wood derived material comprise:
a) 60wt% to 80wt% of the preservation composition fast pyrolysis oil produced from lignocellulosic biomass;
b) 0.1wt% to 5wt% of the preservation composition p-toluenesulfonic acid;
c) water making up to 100wt% of the preservation composition;
d1) 1wt% to 15wt% of the preservation composition acetic acid; and
d2) 1wt% to 15wt% of the preservation composition propylene glycol.

Considering the beneficial properties of the present preservative compositions, the present invention, according to a second aspect, relates to method for preservation of wood wherein the method comprises the step of vacuum-pressure impregnation of wood using a preservation composition as defined above.

The present method preferably comprises the steps of:
a) providing pre-dried wood;
b) vacuum treatment of the pre-dried wood at a pressure 5.000 Pa to 0.9*10⁵ Pa (50 to 900 mbar);
c) contacting the vacuum treated wood with a preservation composition as defined in any one of the claims 1 to 5 at a pressure of 1*10⁵ Pa to 20*10⁵ Pa (1 to 20 bar);
d) optionally, vacuum treatment of the impregnated wood at a pressure 5.000 Pa to 0.9*10⁵ Pa (50 to 900 mbar);
e) drying the impregnated wood between ambient temperature and 80°C;
f) optionally, repeating steps (c) to (e) 1 to 10 times; and
g) curing the dried impregnated wood at a temperature between 100°C and 150°C thereby providing preserved wood.

The present methods preferably use wood is selected from the group consisting of poles, logs, boards, wood/herbaceous fibres, wood chips and wood strands.

The use of the preservation compositions as defined above provide protection of wood against microorganism, protection of wood against insects and an increased life-time of wood exposed to the environment. Accordingly, the present preservation compositions can be used as a substitute for creosote treated wood or heavy metal salt treated wood.

The present invention will be further detailed in the examples presented below.

### Examples

### Introduction

In the present example, methods for manufacturing formulations based on Pyrolysis Bio-oil (PBO) are described that can be applied in vacuum-pressure impregnation followed by drying and curing to make wood and other lignocellulosic and cellulosic materials more durable. The formulations described are based on PBO as the major active ingredient in amounts ≥ 30 wt% of the total formulation.

Suitable PBO's can be produced from a wide range of lignocellulosic materials by a thermal treatment at 250°C to 700°C in in an oxygen free or oxygen-lean atmosphere. The formulations can contain non-toxic additives such as polyols, acetic acid and water to lower the viscosity and homogenize the formulation(s), allowing good wood penetration and maximize/optimize the Weight Percentage Gain (WPG) and curing behavior. Also the use of the additives aids in extending the pot-life of the formulation.

The formulations comprise a catalyst which is essential to cure woody material at relatively low temperatures such as 130°C. Low temperature curing minimizes the loss of structural strength of the wood or related lignocellulosic or cellulosic materials due to thermal degradation. Importantly; the present formulations do not contain any additional resin or curing agent such as formaldehyde, etc. End of life material and production residues (e.g. wood shavings) can be re-used as the feed for pyrolysis and thus subsequent production of new preservative formulation(s). The treated wood shows significant improved durability compared to the starting material.

### Engineering/modified materials with PBO based formulations

The present example discloses a method for manufacturing formulations based on PBO produced from lignocellulosic biomass applied in vacuum-pressure impregnation followed by drying and curing to make wood and other lignocellulosic and cellulosic materials more durable against the elements and decay by micro-organism and insects. A typical composition of the preservative formulation contains:
1. PBO (H₂O content: 10-70 wt%) produced from any ligno-cellulosic material as the active ingredient in amounts of/from 30-99.9wt%.
2. The preservative formulation can contain the excipients/additives HAc in the range of/from 0-23 wt%, a polyol (e.g. propylene glycol, glycerol) in the range of 0-23 wt% and water in the range of/from 0-23 wt% (to solubilize the PBO, control the viscosity and improve the impregnation ability of the PBO.)
3. The preservative formulation contains a catalysts in concentrations in the range of/from 0.1-10 wt%. The catalyst should be a water-soluble organic, mineral or sulfonic based acid or salt (Brønsted and Lewis acids). The catalyst should be able to cure formulations at 120°C-150 °C, so that the preservative formulation is fixated in the material. Also the catalyst should be fixated in the wood after curing (minimal leaching). Examples of catalysts that can be applied are e.g.: p-Toluenesulfonic acid (PTSA), Taurine, Phosphoric acid, MgCl₂, Al₂(SO₄)₃, Lignosulfonic acids, and derivatives and combinations thereof.

Typically; Pre-dried (H₂O ≤ 40 wt%) material (e.g. wood boards) can be treated with the disclosed formulations in a vacuum-pressure reactor. After treatment, wood pieces are air dried for 2 weeks (range: 0-40 days) and subsequently cured at 130°C (range: 120°C-150°C) for 24 h (range: 8-48 hours).

The preservative formulation according to the invention contains PBO produced from any woody or herbaceous biomass as an active part. To the formulations (green and eco-friendly) additives/excipients such as polyols (propylene glycol, glycerol), acetic acid and water can be added to homogenize and stabilize the active part, and to reduce the viscosity and improve the pot-life (≥ 2 months) of the final formulation. A good, homogenized formulation with a modest viscosity is required to gain a sufficient degree of impregnation (WPG) in the material to be treated at ambient temperature.

Impregnation with the preservative formulations described should preferably be performed in a dedicated vacuum/pressure system. Materials to be impregnated can be solid wooden poles/logs/boards, woody/herbaceous-fibres, -chips and -strands (for e.g. manufacturing fiberboards and wood panels), and cellulose/pulp based material (for e.g. manufacturing boards and panels). The present formulations can be applied in both envelope and full cell treatment. The material to be impregnated should be pre-dried before treatment to allow the introduction of sufficient preservative material. The woody material to be treated should preferably have a moisture content of at the most 40 wt%, more preferably the woody material has a moisture content between 0-20 wt%.

In some applications, wood could be pre-shaped before impregnation e.g. in the case of fence posts/poles, this will help to improve the final product durability. Curing of the present formulations in wood is believed to proceed via two different curing pathways. The first is the curing inside the wood in the absence of oxygen and the second is the shell/envelope curing in air. In the latter oxidation is believed to play a significant role, which results in the formation of a water-repellant outer shell/layer in the wood. Shaping wood after curing will remove this desired water-repellant layer and partly opens the wood structure enhancing moisture uptake and leaching of the inside cured material.

Before introduction of the preservative material in the dedicated vacuum/pressure system, material is first vacuum treated at 50-900 mbar to open up the wood structure/cells and make the wood more accessible for fast impregnation. Subsequently the preservative formulation is introduced in the system. After fully emerging the material with the present preservative formulation, a pressure of 1-20 bar is applied. Applying the pressure ensures the rapid penetration of the preservative formulation into the material. As mentioned before, heating of the preservative formulation is not necessary. By varying the process conditions (vacuum, pressure, time), an envelope or full cell treatment can be applied to the material.

Typically, the preservative formulation penetrates readily and rapidly into f.i. boards made from Radiata pine. Also poles made from e.g. Scotch pine are readily impregnated. After impregnation of the material with the preservative formulation, again a short vacuum cycle can be applied to remove residual formulation. Subsequently the impregnated material is air dried at ambient temperature or in a dedicated oven (≤ 80 °C) for typically 2 weeks (range: 0-40 days) and subsequently cured at 130°C for 24 h in a curing oven. The air drying ensures that during curing the preservative formulation stays in the material and does not boil or foam out. This results in a relative clean material after curing. If required, a second impregnation directly after air drying (thus before curing) can be performed to increase the formulation content in the material (WPG).

### Example

To FPBO (Fast Pyrolysis Bio-Oil) produced from pinewood, 8 wt% of propylene glycol, 8 wt% HAc, 8 wt% of water and 0.6 wt% of PTSA (p-toluenesulfonic acid monohydrate) was added. Multiple Radiata pine boards were pre-dried and impregnated with the formulation in a 50 1 vacuum/pressure impregnation system. After impregnation at ambient temperature, the boards were air dried and subsequently cured at 130 °C for 24 h. Subsequently from 3 boards the WPG was determined, and test samples were cut and tested according to EN113, ENV807 and EN84. The results of this durability and leaching tests are given in Table 1.

**Table 1. Results of tests performed**

| **Sample no:** | **WPG AC¹ (wt%)** | **Fungi 16w² Durability class** | | | **Soil box ³ Durability class** | **Leaching⁴ Mass loss (wt%)** |
|---|---|---|---|---|---|---|
| | | Coniophora | Poria | Coriolus | | |
| RPB1 | 67 | 3 | 3 | 1 | 1 | 10 |
| RPB2 | 70 | 3 | 2 | 1 | 1 | 8 |
| RPB3 | 69 | 1 | 2 | 1 | 1 | 8 |

| | | | | | | |
|---|---|---|---|---|---|---|
| ¹: After curing, ²: According to EN113 (16 weeks fungal incubation). ³: According to ENV807. : According to EN84. | | | | | | |

| | |
|---|---|
| **EN113:** | A method to measure the effectiveness of a treated wood specimen against exposure to brown rot and white rot fungi (Coniophora Puteana, Poria Placenta & Coriolus Versicolor). In this method the mass loss by fungal degradation is determined after 16 weeks. |
| **ENV807:** | A method to measure the effectiveness of a wood preservative in a soil box. In this test the wood specimens are exposed to in soil living micro-organisms and the mass loss by microbial degradation is subsequently measured. |
| **EN84:** | A method to measure the leaching of material out of the wood specimen into water. This method is used prior to the EN113 and ENV807 method. |

## Claims

1. Preservation composition for wood or wood derived material, the composition comprises:
a) 30wt% to 99.9wt% of the preservation composition fast pyrolysis oil produced from lignocellulosic biomass; and
b) 0.1wt% to 10wt% of the preservation composition of a catalytic water soluble organic, mineral or sulfonic based acid or salt selected from the group consisting of p-toluenesulfonic acid, taurine, phosphoric acid, MgCl₂, Al₂(SO₄)₃, lignosulfonic acid; and
c) water making up to 100wt% of the preservation composition.

2. Preservation composition for wood or wood derived material according to claim 1, the composition further comprises:
d) 0.01wt% to 30wt% of the preservation composition of one or more additives and/or excipients selected from the group consisting of acetic acid, lactic acid, citric acid, methyl lactate and ethyl lactate and/or selected from the group consisting of glycerol, ethylene glycol and propylene glycol.

3. Preservation composition for wood or wood derived material according to claim 2, wherein the additives and/or excipients are acetic acid and propylene glycol.

4. Preservation composition for wood or wood derived material according to any one of the claims 1 to 3, wherein the water soluble organic, mineral or sulfonic based acid or salt is p-toluenesulfonic acid.

5. Preservation composition for wood or wood derived material according to any one of the claims 2 to 4, wherein the composition comprises:
a) 60wt% to 80wt% of the preservation composition fast pyrolysis oil produced from lignocellulosic biomass;
b) 0.1wt% to 5wt% of the preservation composition p-toluenesulfonic acid;
c)) water making up to 100wt% of the preservation composition;
d1) 1wt% to 15wt% of the preservation composition acetic acid; and
d2) 1wt% to 15wt% of the preservation composition propylene glycol.

6. Method for preservation of wood, the method comprises the step of vacuum-pressure impregnation of wood using a preservation composition as defined in any one of the claims 1 to 5.

7. Method according to claim 6, the method comprises the steps of:
a) providing pre-dried wood;
b) vacuum treatment of the pre-dried wood at a pressure 5.000 Pa to 0.9*10⁵ Pa (50 to 900 mbar);
c) contacting the vacuum treated wood with a preservation composition as defined in any one of the claims 1 to 5 at a pressure of 1*10⁵ Pa to 20*10⁵ Pa (1 to 20 bar);
d) optionally, vacuum treatment of the impregnated wood at a pressure 5.000 Pa to 0.9*10⁵ Pa (50 to 900 mbar);
e) drying the impregnated wood between ambient temperature and 80°C;
f) optionally, repeating steps (c) to (e) 1 to 10 times; and
g) curing the dried impregnated wood at a temperature between 100°C and 150°C thereby providing preserved wood.

8. Method according to claim 6 or claim 7, wherein the wood is selected from the group consisting of poles, logs, boards, wood/herbaceous fibres, wood chips and wood strands.

9. Use of a preservation composition according to any one of the claims 1 to 5 for protecting wood against microorganisms.

10. Use of a preservation composition according to any one of the claims 1 to 5 for increasing the life-time of wood exposed to the environment.

11. Use of wood impregnated with a preservation composition according to any one of the claims 1 to 5 as a substitute for creosote treated wood or heavy metal salt treated wood.

## Patentansprüche

1. Konservierungszusammensetzung für Holz oder Holzwerkstoff, wobei die Zusammensetzung umfasst:
a) zu 30 Gew.-% bis 99,9 Gew.-% der Konservierungszusammensetzung Schnellpyrolyseöl, hergestellt aus lignozellulosehaltiger Biomasse; und
b) zu 0,1 Gew.-% bis 10 Gew.-% der Konservierungszusammensetzung eine katalytische wasserlösliche organische, mineralische oder sulfonbasierte Säure oder ein katalytisches wasserlösliches organisches, mineralisches oder sulfonbasiertes Salz, die/das aus der Gruppe ausgewählt ist, bestehend aus p-Toluolsulfonsäure, Taurin, Phosphorsäure, MgCl₂, Al₂(SO₄)₃, Ligninsulfonsäure; und
c) Wasser, das bis zu 100 Gew.-% der Konservierungszusammensetzung ausmacht.

2. Konservierungszusammensetzung für Holz oder Holzwerkstoff nach Anspruch 1, wobei die Zusammensetzung ferner umfasst:
d) zu 0,01 Gew.-% bis 30 Gew.-% der Konservierungszusammensetzung ein oder mehrere Additive und/oder Hilfsstoffe, die aus der Gruppe ausgewählt sind, bestehend aus Essigsäure, Milchsäure, Zitronensäure, Methyllactat und Ethyllactat und/oder aus der Gruppe ausgewählt sind, bestehend aus Glycerin, Ethylenglykol und Propylenglykol.

3. Konservierungszusammensetzung für Holz oder Holzwerkstoff nach Anspruch 2, wobei die Additive und/oder Hilfsstoffe Essigsäure und Propylenglykol sind.

4. Konservierungszusammensetzung für Holz oder Holzwerkstoff nach einem der Ansprüche 1 bis 3, wobei die wasserlösliche organische, mineralische oder sulfonbasierte Säure oder das wasserlösliche organische, mineralische oder sulfonbasierte Salz p-Toluolsulfonsäure ist.

5. Konservierungszusammensetzung für Holz oder Holzwerkstoff nach einem der Ansprüche 2 bis 4, wobei die Zusammensetzung umfasst:
a) zu 60 Gew.-% bis 80 Gew.-% der Konservierungszusammensetzung Schnellpyrolyseöl, hergestellt aus lignozellulosehaltiger Biomasse;
b) zu 0,1 Gew.-% bis 5 Gew.-% der Konservierungszusammensetzung p-Toluolsulfonsäure;
c)) Wasser, das bis zu 100 Gew.-% der Konservierungszusammensetzung ausmacht;
d1) zu 1 Gew.-% bis 15 Gew.-% der Konservierungszusammensetzung Essigsäure; und
d2) zu 1 Gew.-% bis 15 Gew.-% der Konservierungszusammensetzung Propylenglykol.

6. Verfahren für eine Konservierung von Holz, wobei das Verfahren den Schritt einer Vakuum-Druck-Imprägnierung von Holz unter Verwendung einer Konservierungszusammensetzung nach einem der Ansprüche 1 bis 5 umfasst.

7. Verfahren nach Anspruch 6, wobei das Verfahren die Schritte umfasst:
a) Bereitstellen von vorgetrocknetem Holz;
b) Vakuumbehandlung des vorgetrockneten Holzes bei einem Druck von 5.000 Pa bis 0,9*10⁵ Pa (50 bis 900 mbar);
c) Inberührungbringen des vakuumbehandelten Holzes mit einer Konservierungszusammensetzung nach einem der Ansprüche 1 bis 5 bei einem Druck von 1*10⁵ Pa bis 20*10⁵ Pa (1 bis 20 bar);
d) optional Vakuumbehandlung des imprägnierten Holzes bei einem Druck von 5.000 Pa bis 0,9*10⁵ Pa (50 bis 900 mbar);
e) Trocknen des imprägnierten Holzes zwischen Umgebungstemperatur und 80 °C;
f) optional Wiederholen der Schritte (c) bis (e) 1 bis 10 Mal; und
g) Aushärten des getrockneten imprägnierten Holzes bei einer Temperatur zwischen 100 °C und 150 °C, wodurch konserviertes Holz bereitgestellt wird.

8. Verfahren nach Anspruch 6 oder 7, wobei das Holz aus der Gruppe ausgewählt ist, bestehend aus Stangen, Stämmen, Brettern, Holz-/krautigen Fasern, Holzspänen und Holzsträngen.

9. Verwendung einer Konservierungszusammensetzung nach einem der Ansprüche 1 bis 5 zum Schützen von Holz vor Mikroorganismen.

10. Verwendung einer Konservierungszusammensetzung nach einem der Ansprüche 1 bis 5 zum Verlängern der Lebensdauer von Holz, das der Umwelt ausgesetzt ist.

11. Verwendung von Holz, das mit einer Konservierungszusammensetzung nach einem der Ansprüche 1 bis 5 imprägniert wird, als ein Ersatz für mit Kreosot behandeltes Holz oder mit Schwermetallsalz behandeltes Holz.

## Revendications

1. Composition de préservation pour bois ou matériau dérivé du bois, la composition comprend :
a) 30 % en poids à 99,9 % en poids de l'huile de pyrolyse rapide de la composition de conservation produite à partir de biomasse lignocellulosique ; et
b) 0,1 % en poids à 10 % en poids de la composition de conservation d'un acide ou sel catalytique hydrosoluble organique, minéral ou à base sulfonique choisi dans le groupe constitué d'acide p-toluènesulfonique, taurine, acide phosphorique, MgCl₂, Al₂(SO₄)₃, acide lignosulfonique ; et
c) de l'eau complétant à 100 % en poids de la composition de conservation.

2. Composition de préservation pour bois ou matériau dérivé du bois selon la revendication 1, la composition comprend en outre :
d) 0,01 % en poids à 30 % en poids de la composition de conservation d'un ou plusieurs additifs et/ou excipients choisis dans le groupe constitué d'acide acétique, acide lactique, acide citrique, lactate de méthyle et lactate d'éthyle et/ou choisis dans le groupe constitué de glycérol, éthylène glycol et propylène glycol.

3. Composition de préservation pour bois ou matériau dérivé du bois selon la revendication 2, dans laquelle les additifs et/ou excipients sont de l'acide acétique et du propylène glycol.

4. Composition de préservation pour bois ou matériau dérivé du bois selon l'une quelconque des revendications 1 à 3, dans laquelle l'acide ou le sel hydrosoluble organique, minéral ou à base sulfonique est de l'acide p-toluènesulfonique.

5. Composition de préservation pour bois ou matériau dérivé du bois selon l'une quelconque des revendications 2 à 4, dans laquelle la composition comprend :
a) 60 % en poids à 80 % en poids de l'huile de pyrolyse rapide de la composition de conservation produite à partir de biomasse lignocellulosique ;
b) 0,1 % en poids à 5 % en poids de la composition de conservation acide p-toluènesulfonique ;
c)) de l'eau complétant à 100 % en poids de la composition de conservation ;
d1) 1 % en poids à 15 % en poids d'acide acétique de la composition de conservation ; et
d2) 1 % en poids à 15 % en poids de la composition de conservation propylène glycol.

6. Procédé de préservation du bois, le procédé comprend l'étape d'imprégnation vide-pression du bois à l'aide d'une composition de préservation selon l'une quelconque des revendications 1 à 5.

7. Procédé selon la revendication 6, le procédé comprend les étapes consistant à :
a) fournir du bois préséché ;
b) traiter sous vide du bois préséché à une pression de 5 000 Pa à 0,9 * 10⁵ Pa (50 à 900 mbar) ;
c) mettre en contact le bois traité sous vide avec une composition de préservation selon l'une quelconque des revendications 1 à 5 à une pression de 1 * 10⁵ Pa à 20 * 10⁵ Pa (1 à 20 bar) ;
d) éventuellement, traiter sous vide le bois imprégné à une pression de 5 000 Pa à 0,9 * 10⁵ Pa (50 à 900 mbar) ;
e) sécher le bois imprégné entre la température ambiante et 80 °C ;
f) éventuellement, répéter les étapes (c) à (e) 1 à 10 fois ; et
g) durcir le bois imprégné séché à une température comprise entre 100 °C et 150 °C, fournissant ainsi du bois préservé.

8. Procédé selon la revendication 6 ou la revendication 7, dans lequel le bois est choisi dans le groupe constitué de poteaux, rondins, planches, fibres de bois/herbacées, copeaux de bois et lamelles de bois.

9. Utilisation d'une composition de préservation selon l'une quelconque des revendications 1 à 5 pour protéger le bois contre les micro-organismes.

10. Utilisation d'une composition de préservation selon l'une quelconque des revendications 1 à 5 pour augmenter la durée de vie du bois exposé à l'environnement.

11. Utilisation de bois imprégné d'une composition de préservation selon l'une quelconque des revendications 1 à 5 en tant que substitut au bois traité à la créosote ou au bois traité par un sel métallique lourd.
